# EUROPÄISCHE PATENTSCHRIFT

(11) **EP 2 880 731 B1**
(45) Veröffentlichungstag und Bekanntmachung des Hinweises auf die Patenterteilung: **29.11.2017**
(21) Anmeldenummer: 12773256.8
(22) Anmeldetag: 24.09.2012
(51) Int. Cl.: H02H 7/26

(54) **FEHLERERKENNUNG IN EINEM ENERGIEVERSORGUNGSNETZ MIT DEZENTRALER ENERGIEEINSPEISUNG**
FAULT IDENTIFICATION IN AN ENERGY SUPPLY NETWORK WITH DECENTRALISED ENERGY FEEDING
DÉTECTION DE DÉFAILLANCES DANS UN RÉSEAU D'ALIMENTATION EN ÉNERGIE À INJECTION D'ÉNERGIE DÉCENTRALISÉE

(43) Veröffentlichungstag der Anmeldung: 10.06.2015
(73) Patentinhaber: Siemens Aktiengesellschaft, 80333 München (DE)
(72) Erfinder: ARZIG, Klaus, 90537 Feucht (DE); KEREIT, Matthias, 12159 Berlin (DE); OPITSCH, Bruno, 90473 Nürnberg (DE)
(86) Internationale Anmeldenummer: PCT/EP2012/068754
(87) Internationale Veröffentlichungsnummer: WO 2014/044328

(56) Entgegenhaltungen:
- EP-A1- 2 388 879
- EP-A2- 0 957 559
- US-A1- 2007 086 133

## Beschreibung

Die Erfindung betrifft ein Verfahren zum Erkennen eines Fehlers in einem Netzsegment eines elektrischen Energieversorgungsnetzes, bei dem mittels eines Schutzgerätes der in einer Zuführungsleitung des Netzsegments fließende Strom unter Bildung von Strommesswerten erfasst wird, die Strommesswerte mit einem Strom-Schwellenwert verglichen werden, und bei Überschreitung des Strom-Schwellenwertes von dem Schutzgerät ein Fehlersignal erzeugt wird, das einen Fehler in dem Netzsegment angibt. Die Erfindung betrifft darüber hinaus ein entsprechendes Schutzgerät sowie ein entsprechendes Schutzsystem.

Ein Verfahren der eingangs genannten Art wird beispielsweise von sogenannten Überstromzeitschutzgeräten, die die Anmelderin unter dem Namen "SIPROTEC 7SJ80" vertreibt, durchgeführt und ist in dem Gerätehandbuch "SIPROTEC - Overcurrent Time Protection 7SJ80, V4.6, Manual", Siemens AG 2010, Bestellnr. E50417-G1140-C343-A4, beschrieben. Überstromzeitschutzgeräte werden beispielsweise in Verteilnetzabschnitten im Nieder- und Mittelspannungsbereich eines Energieversorgungsnetzes eingesetzt, um elektrische Einrichtungen (z. B. Übertragungsleitungen) vor Fehlern, wie z.B. Kurzschlüssen, zu schützen. Hierfür wird von einem Überstromzeitschutzgerät ein an einer Messstelle in dem Energieversorgungsnetz fließender Strom erfasst und mit einem im Überstromzeitschutzgerät fest eingestellten Strom-Schwellenwert verglichen. Erkennt das Überstromzeitschutzgerät eine Schwellenwertüberschreitung, so erzeugt es ein Fehlersignal, das beispielsweise zur Erzeugung eines Auslösekommandos für einen das überwachte Netzsegment mit der Quelle verbindenden Leistungsschalter zum Öffnen seiner Schaltkontakte veranlasst, so dass der Fehler daraufhin von dem übrigen Energieversorgungsnetz abgetrennt wird. Der Strom-Schwellenwert wird einmalig aus einer Netzberechnung ermittelt, bei der unter Berücksichtigung der bekannten Spannungsebene und der den überwachten Netzabschnitt speisenden Energiequelle ein im Falle eines Fehlers fließender Fehlerstrom ermittelt wird. Der Strom-Schwellenwert wird derart gewählt, dass der aus der Netzberechnung ermittelte Fehlerstrom sicher von einem normalen Laststrom unterschieden werden kann.

Das Schutzprinzip eines Überstromzeitschutzgerätes wurde ursprünglich für klassische Energieversorgungsnetze entwickelt, bei denen der Lastfluss in einer Richtung verläuft, nämlich von wenigen zentralen Energieerzeugern über einen Übertragungsabschnitt des Energieversorgungsnetzes bis hin zu Verteilnetzabschnitten auf Mittel- und Niederspannungsebene. Jüngere Entwicklungen und die Liberalisierung der Strommärkte führen jedoch dazu, dass auch in den unteren Netzebenen, also beispielsweise im Verteilnetz auf Mittel- oder Niederspannungsebene, dezentrale Energieerzeuger elektrische Energie in das Energieversorgungsnetz einspeisen. Solche dezentralen Energieerzeuger können beispielsweise Blockheizkraftwerke, Photovoltaik-Anlagen und Windkraft-Anlagen sein.

Durch die dezentrale Energieeinspeisung wird die Funktionsweise eines Überstromzeitschutzgerätes beeinflusst. Beispielsweise werden in einem Netzsegment mit dezentraler Energieeinspeisung vorliegende Fehler nicht nur durch die Zuführungsleitung des Netzsegments, sondern auch durch die dezentralen Energieeinspeisungen selbst mit Fehlerstrom gespeist. Hierdurch fällt der von einem Überstromzeitschutzgerät in der Zuführungsleitung des Netzsegments gemessene Strom im Fehlerfall deutlich geringer aus als bei der klassischen einseitigen Einspeisung, so dass der Fehler nicht - oder nur verzögert - abgeschaltet wird. Außerdem kann sich zu Zeitpunkten sehr hoher dezentraler Energieeinspeisung der Energiefluss in dem Energieversorgungsnetz umkehren, so dass dem Überstromzeitschutzgerät eine Unterscheidung zwischen internen - also auf dem überwachten Netzsegment liegenden - und externen - also außerhalb des Netzsegmentes liegenden - Fehlern erschwert wird. Weitere Ausführungsformen von Überstromschutzgeräten werden in den folgenden Dokumenten beschrieben: EP2388879 und US2007/0086133. Der Erfindung liegt daher die Aufgabe zugrunde, ein Verfahren der eingangs genannten Art sowie ein entsprechendes Schutzgerät und ein Schutzsystem dahingehend weiterzuentwickeln, dass auch bei dezentraler Energieeinspeisung in dem überwachten Netzsegment eine zuverlässige und selektive Fehlererkennung möglich ist.

Diese Aufgabe wird erfindungsgemäß durch ein gattungsgemäßes Verfahren gelöst, bei dem in dem Netzsegment des Energieversorgungsnetzes zumindest ein Energieerzeuger angeordnet ist, der an einer Einspeisestelle elektrische Energie in das Netzsegment einspeist, eine Strom-Information erfasst wird, die eine Angabe über den momentan an der Einspeisestelle fließenden Strom umfasst, die Strom-Information an das Schutzgerät übermittelt wird und das Schutzgerät die Strom-Information zum Erkennen des Fehlers heranzieht.

Bei dem erfindungsgemäßen Verfahren werden folglich in vorteilhafter Weise Informationen über die momentane Einspeisesituation, insbesondere über den an der Einspeisestelle des zumindest einen Energieerzeugers fließenden Strom, dazu genutzt, um dem Schutzgerät eine Übersicht über die in dem Netzsegment jeweils herrschenden Lastflusszustände zu verschaffen. Damit ist das Schutzgerät in der Lage, bei der Erzeugung des Fehlersignals die übermittelte Information heranzuziehen und die Durchführung des Schutzverfahrens daran anzupassen. Hierdurch kann die Überwachung des Netzsegments deutlich zuverlässiger und selektiver erfolgen, so dass beispielsweise interne Fehler bei einem hohen Wert dezentral eingespeister elektrischer Energie besser erkannt werden können und darüber hinaus interne Fehler mit großer Sicherheit von externen Fehlern unterschieden werden können.

Gemäß einer vorteilhaften Ausführungsform des erfindungsgemäßen Verfahrens ist vorgesehen, dass die Strom-Information einen an der Einspeisestelle erfassten Stromzeigermesswert umfasst, der Amplitude und Phasenwinkel des Stroms an der Einspeisestelle angibt.

Mit solchen Stromzeigermesswerten lässt sich besonders vorteilhaft die momentan in dem Netzsegment vorliegende Stromfluss-Situation darstellen.

Alternativ kann auch vorgesehen sein, dass die Strom-Information einen an der Einspeisestelle erfassten Leistungsmesswert umfasst.

Häufig werden nämlich von dem Energieerzeuger ohnehin Leistungsmesswerte, die eine momentan von dem Energieerzeuger in das Netz eingespeiste Leistung angeben, bereitgestellt, so dass diese in vorteilhafter Weise zu dem Schutzgerät übermittelt werden können. Das Schutzgerät kann hieraus bei Kenntnis der Spannungsebene die momentanen Strommesswerte berechnen.

Eine weitere vorteilhafte Ausführungsform des erfindungsgemäßen Verfahrens sieht vor, dass die Strom-Information von einer Einspeiseeinrichtung erzeugt wird, die dazu eingerichtet ist, die von dem zumindest einen Energieerzeuger abgegebene elektrische Energie in das Netzsegment des Energieversorgungsnetzes einzukoppeln.

Bei dieser Ausführungsform wird die Strom-Information beispielsweise von einem Umrichter bereitgestellt, der dazu eingerichtet ist, die von einem Energieerzeuger, beispielsweise einer Photovoltaik- oder einer Windkraft-Anlage, bereitgestellte elektrische Energie frequenz- und spannungsrichtig in das Netzsegment einzuspeisen.

Es kann aber auch vorgesehen sein, dass die Strom-Information von einer Sensoreinrichtung erzeugt wird, die zur Messung von Strom- und/oder Leistung an der Einspeisestelle eingerichtet ist.

Bei dieser Ausführungsform werden zur Erzeugung der Strom-Information separate Sensoreinrichtungen verwendet, die an den Einspeisestellen im Netzsegment angeordnet sind. Bei mehreren dezentralen Einspeisern ist auch ein gemischter Betrieb, also die Bereitstellung der Strom-Information mittels einer Einspeiseeinrichtung (Umrichter) bei einigen Energieerzeugern und die Bereitstellung der Strom-Information durch Messung mit einer separaten Sensoreinrichtung bei anderen Energieerzeugern, möglich.

Eine weitere vorteilhafte Ausführungsform des erfindungsgemäßen Verfahrens sieht vor, dass das Schutzgerät bei vorliegendem Fehlersignal ein Schaltkommando an eine in der Zuführungsleitung des Netzsegments angeordnete Schalteinrichtung abgibt, das die Schalteinrichtung zum Unterbrechen des Stromflusses durch die Zuführungsleitung veranlasst.

Hierdurch kann ein schnelles Abschalten des durch die Zuführungsleitung fließenden Anteils des Fehlerstroms erreicht werden. Da üblicherweise auch in den Steuerungsmitteln dezentraler Energieerzeuger einfache Fehlererkennungsmittel integriert sind, wird der verbleibende Anteil des Fehlerstroms von diesen abgeschaltet.

Gemäß einer weiteren vorteilhaften Ausführungsform des erfindungsgemäßen Verfahrens ist vorgesehen, dass in dem Netzsegment außer dem zumindest einen Energieerzeuger zumindest ein weiterer, gleichartiger Energieerzeuger vorgesehen ist, und die Strom-Information für die Einspeisestelle des zumindest einen weiteren Energieerzeugers anhand der Strom-Information des zumindest einen Energieerzeugers abgeschätzt wird.

Bei dieser Ausführungsform können auch solche Energieerzeuger, die selbst über keine Mess- oder Übertragungsmöglichkeiten für eine Strom-Information verfügen, in die Schutzauswertung des Schutzgerätes einbezogen werden. Bei bestimmten gleichartigen Energieerzeugern (beispielsweise zwei Photovoltaik-Anlagen), die in demselben Netzsegment - und damit üblicherweise in vergleichsweise enger Nachbarschaft - angeordnet sind, kann nämlich bei bekannter Strom-Information des einen Energieerzeugers und vorgegebenen Parametern für beide Energieerzeuger (z.B. maximale Einspeisemenge, Ausrichtungswinkel zur Sonne) die momentan von dem anderen Energieerzeuger, der nicht zur Bereitstellung der Strom-Information eingerichtet ist, eingespeiste Leistung - und damit dessen Strom-Information - abgeschätzt werden. Dies liegt daran, dass solche gleichartigen Energieerzeuger, die ihre elektrische Energie aus in der Umgebung des Netzsegmentes vorhandener Primärenergie (z.B. Sonnenlicht, Wind) gewinnen, üblicherweise sehr ähnlichen Umgebungsbedingungen (z.B. Sonneneinstrahlung, Windstärke) ausgesetzt sind.

Gemäß einer weiteren vorteilhaften Ausführungsform des erfindungsgemäßen Verfahrens ist vorgesehen, dass - die Strom-Information von dem Schutzgerät zur Anpassung des Strom-Schwellenwertes herangezogen wird, indem bei steigender von dem zumindest einen Energieerzeuger in das Netzsegment eingespeister elektrischer Energie ein entsprechend verringerter Strom-Schwellenwert verwendet wird.

Bei dieser Ausführungsform wird die Strom-Information in vorteilhafter Weise dazu genutzt, den für die Beurteilung des Vorliegens eines Fehlerzustandes in dem überwachten Netzsegment verwendeten Strom-Schwellenwert an die Einspeisesituation in dem Netzsegment anzupassen. Bei steigender Stromeinspeisung in dem Netzsegment durch dezentrale Energieerzeuger wird nämlich ein in dem Netzsegment vorhandener Fehler teilweise auch durch die dezentral eingespeisten Ströme mitgespeist, so dass der durch die Zuführungsleitung des Netzsegmentes fließende Anteil des Fehlerstromes entsprechend sinkt und damit unterhalb des in dem Schutzgerät ursprünglich eingestellten Strom-Schwellenwertes liegen kann, so dass dieses entweder keinen Fehler erkennen oder aufgrund einer entsprechenden Strom-Zeit-Schutzcharakteristik verzögert auslösen würde. Verringert das Schutzgerät jedoch anhand der vorhandenen Strom-Information den zur Beurteilung des Fehlerzustandes verwendeten Stromschwellenwert, so kann eine zuverlässige Fehlerüberwachung in Abhängigkeit von der jeweiligen Einspeisesituation in dem Netzsegment durchgeführt werden.

Eine vorteilhafte Ausführungsform des erfindungsgemäßen Verfahrens sieht in diesem Zusammenhang vor, dass bei Überschreitung des verringerten Strom-Schwellenwertes das Schutzgerät das Fehlersignal erzeugt.

Auf diese Weise wird unmittelbar bei Erkennung einer Überschreitung des verringerten Strom-Schwellenwertes das Fehlersignal erzeugt.

Alternativ kann zur Absicherung der Entscheidung des Schutzgerätes hinsichtlich eines möglichen Fehlers jedoch auch vorgesehen sein, dass bei Überschreitung des verringerten Strom-Schwellenwertes das Schutzgerät ein Ausschaltsignal an den zumindest einen Energieerzeuger sendet, das den zumindest einen Energieerzeuger zum Unterbrechen der Einspeisung der elektrischen Leistung in das Netzsegment veranlasst, und dass nach erfolgter Unterbrechung der Einspeisung das Schutzgerät den in der Zuführungsleitung des Netzsegments fließenden Strom mit dem ursprünglichen Strom-Schwellenwert vergleicht und das Fehlersignal nur bei Überschreitung des ursprünglichen Strom-Schwellenwertes erzeugt.

Bei dieser Ausführungsform wird der verringerte Stromschwellenwert lediglich dazu herangezogen, einen Hinweis auf einen etwaigen in dem Netzsegment vorliegenden Fehler zu ermitteln. Durch das in Folge versandte Ausschaltsignal und die - zumindest temporäre - Unterbrechung der Einspeisung durch den zumindest einen dezentralen Energieerzeuger wird vorübergehend quasi eine klassische einseitig gespeiste Lastflusssituation wiederhergestellt. Liegt in einem solchen Fall tatsächlich ein Fehler in dem Netzsegment vor, so müsste der nunmehr lediglich durch die Zuführungsleitung gespeiste und von dem Schutzgerät gemessene Fehlerstrom entsprechend ansteigen, so dass das Schutzgerät den ursprünglichen Wert des Strom-Schwellenwertes dazu verwenden kann, das Netzsegment auf einen vorliegenden Fehler zu überprüfen.

Eine weitere vorteilhafte Ausführungsform des erfindungsgemäßen Verfahren sieht zudem vor, dass das Schutzgerät das Fehlersignal auch dann erzeugt, wenn der Strom-Schwellenwert überschritten ist und aus der Strom-Information des zumindest einen Energieerzeugers ein Überschuss in das Netzsegment eingespeister elektrischer Energie hervorgeht.

Bei dieser Ausführungsform wird die Selektivität des Schutzverfahrens - also die Fähigkeit zur Unterscheidung eines internen von einem externen Fehler - durch Heranziehen der Strom-Information deutlich erhöht. Üblicherweise würde ein das Netzsegment überwachendes Schutzgerät im Falle eines externen Fehlers nicht auslösen. Da sich jedoch bei einem hohen Anteil an dezentraler Einspeisung in das Netzsegment insgesamt eine Stromflussumkehr durch die Zuführungsleitung ergeben kann, so dass auch ein externer Fehler durch den insgesamt in das Netzsegment eingespeisten Strom gespeist werden kann, wird auch in einem solchen Fall von dem Schutzgerät das Fehlersignal erzeugt, um eine Abschaltung des durch die dezentralen Energieerzeuger gespeisten Anteils des Fehlerstroms vornehmen zu können.

Um einen externen Fehler noch genauer von einem internen unterscheiden zu können, ist gemäß einer weiteren vorteilhaften Ausführungsform des erfindungsgemäßen Verfahrens vorgesehen, dass das Schutzgerät auch die an der Zuführungsleitung des Netzsegments anliegende Spannung unter Erzeugung von Spannungsmesswerten erfasst und unter Heranziehung der Strommesswerte und der Spannungsmesswerte ein Richtungssignal bildet, das eine Richtung des in der Zuführungsleitung des Netzsegments fließenden Stroms angibt, und das Schutzgerät das Fehlersignal nur dann erzeugt, wenn auch das Richtungssignal einen aus dem Netzsegment heraus fließenden Strom angibt.

Durch die Erzeugung des Richtungssignals unter Hinzunahme der Spannungsmesswerte kann die Erkennungsrate externer Fehler weiter verbessert werden. Algorithmen zur Fehlerrichtungserkennung anhand von Strom- und Spannungsmesswerten sind dem Fachmann als solche bekannt und werden daher an dieser Stelle nicht weiter erläutert.

In diesem Zusammenhang wird es ferner als vorteilhaft angesehen, wenn mit der Erzeugung des Fehlersignals das Schutzgerät einen Einschaltbefehl an den zumindest einen Energieerzeuger abgibt, das den zumindest einen Energieerzeuger zur Fortsetzung seiner Einspeisung elektrischer Energie in das Netzsegment veranlasst.

Bei dieser Ausführungsform kann in vorteilhafter Weise verhindert werden, dass eine etwaige in einer Steuereinrichtung des dezentralen Energieerzeugers integrierte Fehlererkennungseinrichtung selbst die Einspeisung elektrischer Energie in das Netzsegment unterbricht, um den externen Fehler abzuschalten. Da nämlich das Schutzgerät bereits durch Erzeugung des Fehlersignals die Abschaltung der Zuführungsleitung und damit eine Trennung des externen Fehlers von dem Netzsegment ermöglicht hat, ist es von Vorteil, wenn alle in dem Netzsegment vorhandenen dezentralen Energieeinspeiser ihre Stromeinspeisung in das nunmehr als Inselnetz betriebene Netzsegment fortsetzen, so dass zumindest einige der in dem Netzsegment gegebenenfalls vorhandenen Lasten durch die dezentralen Energieerzeuger weiterhin mit elektrischer Energie versorgt werden können.

Die oben genannte Aufgabe wird auch durch ein elektrisches Schutzgerät mit einer Messwerterfassungseinrichtung zum Erfassen von Strommesswerten an einer Messstelle in einer Zuführungsleitung eines Netzsegments eines elektrischen Energieversorgungsnetzes und einer Steuereinrichtung, die dazu eingerichtet ist, die Strommesswerte mit einem Strom-Schwellenwert zu vergleichen und bei Überschreitung des Strom-Schwellenwertes ein Fehlersignal zu erzeugen, gelöst.

Erfindungsgemäß ist vorgesehen, dass das Schutzgerät zur Durchführung eines Verfahrens gemäß einem der Ansprüche 1 bis 11 eingerichtet ist. Die oben genannte Aufgabe wird schließlich auch durch ein Schutzsystem zur Erkennung eines Fehlers in einem Netzsegment eines elektrischen Energieversorgungsnetzes gelöst, bei dem das Netzsegment zumindest einen Energieerzeuger aufweist, der zur Einspeisung elektrischer Energie in das Netzsegment eingerichtet ist, und das Schutzsystem an einer Zuführungsleitung des Netzsegments ein Schutzgerät nach Anspruch 12 aufweist.

Hinsichtlich der Vorteile des erfindungsgemäßen Schutzgerätes und des erfindungsgemäßen Schutzsystems wird auf die hinsichtlich des erfindungsgemäßen Verfahrens gemachten Ausführungen verwiesen.

Die Erfindung wird nachfolgend anhand eines Ausführungsbeispiels näher erläutert. Hierzu zeigen
- Figur 1: ein elektrisches Energieversorgungsnetz mit einem durch ein Schutzgerät überwachten Netzsegment gemäß dem Stand der Technik;
- Figur 2: eine Auslösekennlinie eines Schutzgerätes gemäß dem Stand der Technik;
- Figur 3: ein elektrisches Energieversorgungsnetz mit einem durch ein Schutzgerät überwachten Netzsegment mit dezentraler Einspeisung; und
- Figur 4: eine Auslösekennlinie eines Schutzgerätes zur Überwachung des Netzsegmentes gemäß Figur 3.

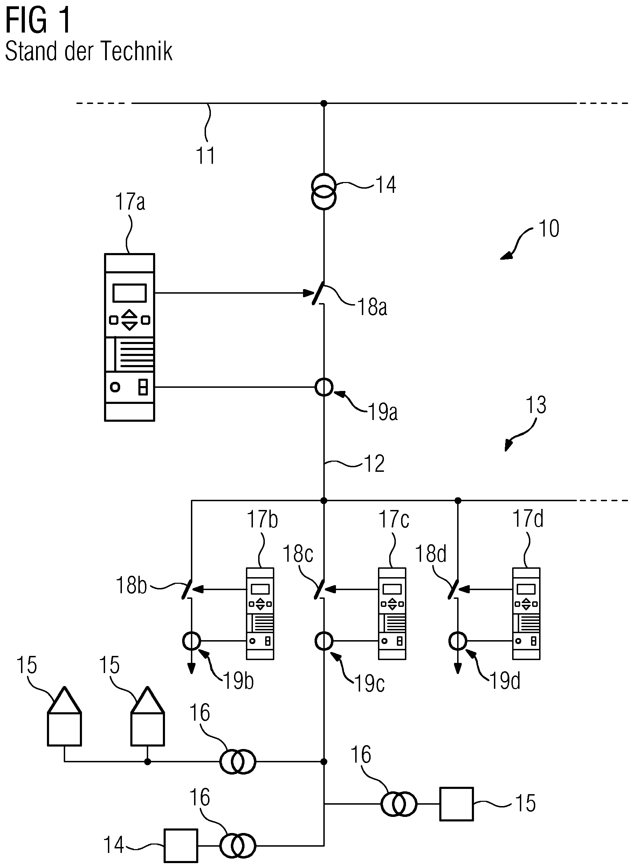

Figur 1 zeigt einen Teil eines elektrischen Energieversorgungsnetzes 10 in einer sogenannten "Single-Line-Darstellung", d.h., dass alle Phasen des Energieversorgungsnetzes vereinfacht als eine Leitung dargestellt werden. Das nachfolgend beschriebene Schutzverfahren wird üblicherweise pro Phase durchgeführt. Das Energieversorgungsnetz 10 weist eine Sammelschiene 11 auf, die beispielsweise auf einer Hochspannungsebene eines Übertragungsnetzabschnitts des Energieversorgungsnetzes liegen kann. Über eine Zuführungsleitung 12 wird ein Netzsegment 13 in Form eines Abzweigs mit elektrischer Energie aus der Sammelschiene 11 gespeist. Das konkret dargestellte Netzsegment 13 ist über einen in der Zuführungsleitung 12 angeordneten Transformator 14 mit der Sammelschiene 11 verbunden und liegt beispielsweise auf Mittelspannungsebene eines Verteilnetzabschnitts des Energieversorgungsnetzes 10. In dem Netzsegment 13 sind auf einer Niederspannungsebene mehrere Energieverbraucher 15 als elektrische Lasten angeordnet, die über Verteilnetztransformatoren 16 mit der Mittelspannungsebene verbunden sind.

Zur Überwachung des Netzsegments 13 ist ein Schutzgerät 17a vorgesehen, das an der Zuführungsleitung 12 angeordnet ist und zum Schutz des gesamten Netzsegments 13 gegen einen etwaigen Fehler, z.B. einen Kurzschluss, dient. Dem Schutzgerät 17a ist eine Schalteinrichtung 18a, z.B. ein Leistungsschalter, zugeordnet, die eine Abtrennung des Netzsegments durch Öffnen ihrer Schaltkontakte vornehmen kann.

Bei dem Schutzgerät 17a handelt es sich um ein sogenanntes Überstromzeitschutzgerät, wie es häufig auf Mittel- oder Niederspannungsebene eines Energieversorgungsnetzes eingesetzt wird. Überstromzeitschutzgeräte sind dazu eingerichtet, anhand des an ihrer jeweiligen Messstelle fließenden Stroms eine Entscheidung über den Betriebszustand des nachfolgenden Netzteiles, insbesondere über das mögliche Vorliegen eines Fehlers, zu treffen.

Konkret wird beispielsweise ein an einer in der Zuführungsleitung 12 angeordneten Messstelle 19a fließender Strom - z.B. mittels geeigneter Stromwandler - phasenweise erfasst und dem Schutzgerät 17a zugeführt. Dieses erzeugt aus dem analogen Stromsignal für jede Phase den momentanen Strom angebende digitale Strommesswerte und führt sie einer geräteinternen Steuereinrichtung zu, die einen Überstromzeitschutz-Algorithmus durchführt.

In Abweichung zur Darstellung nach Figur 1 ist es auch möglich, das an der Messstelle 19a erfasste analoge Stromsignal bereits wandlerseitig zu digitalisieren und entsprechende Strommesswerte dem Schutzgerät 17a zuzuführen. Für die weitere Schutzauswertung ist die Vorgehensweise hierbei jedoch ohne Belang.

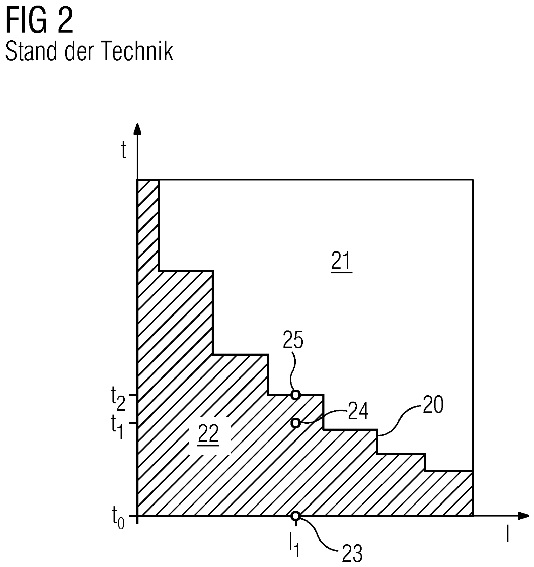

Das von dem Schutzgerät 17a ausgeführte Überstromzeitschutzverfahren wird nachfolgend unter Hinzunahme der Figur 2 näher erläutert. Hierzu zeigt Figur 2 ein Diagramm, in dem ein Strom-Schwellenwert in Form einer Auslösekennlinie 20 dargestellt ist, die einen Auslösebereich 21 von einem schraffiert dargestellten Normalbetriebsbereich 22 trennt. Das Diagramm dient zur Darstellung von Strom-Zeit-Wertepaaren, die auf ihre Lage innerhalb des Diagramms untersucht werden. Hierzu werden im Diagramm der Figur 2 Wertepaare aus einem von dem Schutzgerät 17a erfassten, den momentanen Strom in der Zuführungsleitung 12 angebenden Strommesswert und der Dauer seines Anstehens eingetragen. Die Form der Auslösekennlinie 20 sorgt hierbei dafür, dass bei hohen Strömen bereits nach kurzer Zeit ein Fehler erkannt wird, kleinere Ströme hingegen erst eine längere Zeit anstehen müssen, bevor sie zu einer Fehlererkennung führen. Ströme unter einer bestimmten Schwelle werden als normale Lastströme angesehen und führen auch bei längerem Anstehen zu keiner Fehlererkennung.

Beispielsweise werde zum Zeitpunkt t0=0 ein erster momentaner Strommesswert I1 erfasst; das zugehörige Wertepaar t0/I1 ist in Figur 2 mit dem Bezugszeichen 23 gekennzeichnet. Das Wertepaar liegt im Normalbetriebsbereich, so dass das Schutzgerät 17a keinen Fehler in dem überwachten Netzsegment erkennt. Nach Ablauf einer Zeitdauer t1 steht der Strommesswert I1 noch immer an, das zugehörige Wertepaar t1/I1 ist in Figur 2 mit dem Bezugszeichen 24 gekennzeichnet. Das Wertepaar liegt noch immer im sicheren Betriebsbereich, so dass das Schutzgerät 17a keinen Fehler in dem Netzsegment erkennt. Erst nach Ablauf einer Zeitdauer t2 überschreitet das zugehörige, in Figur 2 mit dem Bezugszeichen 25 gekennzeichnete Wertepaar t2/I1 den Strom-Schwellenwert in Form der Auslösekennlinie 20, so dass das Schutzgerät aufgrund des langen Anstehens des Stromes I1 einen Fehler in dem Netzsegment erkennt und ein Fehlersignal erzeugt. Dieses Fehlersignal kann nachfolgend beispielsweise dazu verwendet werden, ein Auslösekommando an die Schalteinrichtung 18a abzugeben, um diese zum Abtrennen des Netzsegments 13 vom restlichen Energieversorgungsnetz 10 zu veranlassen.

Der in Figur 2 gezeigte Strom-Schwellenwert in Form der Auslösekennlinie 20 ist zur besseren Erläuterung vergleichsweise einfach als Treppenkurve gehalten. Üblicherweise sind in Überstromzeitschutzgeräten verwendete Auslösekennlinien deutlich komplexer, beispielsweise in Form von Parabeln, vorgesehen. Die genaue Form der als Strom-Schwellenwert verwendeten Auslösekennlinie ist für die Funktionsweise der nachfolgend erläuterten Erfindung jedoch nicht maßgeblich, so dass an dieser Stelle zum besseren Verständnis von einer Treppenkurve ausgegangen werden kann.

Um bei einem Fehler auf einem der Zweige des Netzsegments 13 nicht immer das komplette Netzsegment abschalten zu müssen, können optional weitere Schutzgeräte 17b-c vorgesehen sein, die zur Absicherung der jeweiligen Zweige des Netzsegments 13 gegen etwaige Fehler dienen. Wie bereits zu Schutzgerät 17a erläutert, werden auch den Schutzgeräten 17b-d Strommesswerte zugeführt, die den an Messstellen 19b-d fließenden Strom angeben. Unter Verwendung eines zu dem bereits hinsichtlich Schutzgerät 17a erläuterten Schutzverfahren vergleichbaren Überstromzeitschutzverfahrens entscheiden auch die Schutzgeräte 17b-d über das Vorliegen eines Fehlers in ihrem Zweig des Netzsegments 13. Bei einem erkannten Fehler, können die Schutzgeräte 17b-d über ihnen zugeordnete Schalteinrichtungen 18b-d den fehlerbehafteten Zweig aus dem Netzsegment 13 abtrennen. Sollten die Schalteinrichtungen 18b-d nicht zum Abschalten eines Fehlerstroms ausgelegt sein, ist es auch möglich, erst durch die Schalteinrichtung 18a des gesamten Netzsegmentes 13 für eine kurze Zeit das Netzsegment 13 abzuschalten und während des hierdurch erzeugten stromlosen Zustands die jeweilige Schalteinrichtung 18b-d gefahrlos zu öffnen. Danach kann die Schalteinrichtung 18a wieder geschlossen werden, da der fehlerbehaftete Zweig des Netzsegmentes nunmehr vom restlichen Energieversorgungsnetz isoliert ist.

Durch das Vorsehen einer sogenannten Staffelzeit bzw. eine entsprechend angepasste Auslösekennlinie kann zudem sichergestellt werden, dass eine Auslösung des jeweiligen Zweig-Schutzgerätes 17b-d erfolgen kann, bevor das das gesamte Netzsegment 13 schützende Schutzgerät 17a auslösen würde. Auf diese Weise kann in den meisten Fällen selektiv nur der tatsächlich von einem Fehler betroffene Zweig des Netzsegmentes 13 abgeschaltet werden.

Das in Figur 1 dargestellte Energieversorgungsnetz 10 stellt ein klassisches Energieversorgungsnetz dar, bei dem der Stromfluss in einer Richtung verläuft, nämlich von wenigen Energieerzeugern großer Einspeiseleistung über den Übertragungsnetzabschnitt hin zu den Verteilnetzabschnitten auf Mittel- und Niederspannungsebene. Dementsprechend ist auch die Funktionsweise des Schutzsystems dahingehend ausgelegt, dass der zu erkennende Fehlerstrom lediglich aus einer Richtung gespeist wird. Bei einer Netzberechnung kann vor der Inbetriebnahme des Schutzsystems bei Kenntnis der Spannungsebene und der vorhandene Energiequellen der im Fehlerfall fließende Fehlerstrom berechnet werden, so dass hieraus der passende Strom-Schwellenwert bzw. die passende Auslösekennlinie für das Schutzgerät 17a (und sofern vorhanden auch für die Schutzgeräte 17b-d) bestimmt und im Zuge einer Geräteparametrierung fest im jeweiligen Schutzgerät eingestellt werden kann.

In jüngerer Zeit hat sich durch die Liberalisierung der Strommärkte und die Verfügbarkeit kleinerer dezentral einsetzbarer Energieerzeuger die Betriebsweise von Energieversorgungsnetzen deutlich verändert, insbesondere kann nicht mehr von einer einheitlichen Stromflussrichtung ausgegangen werden.

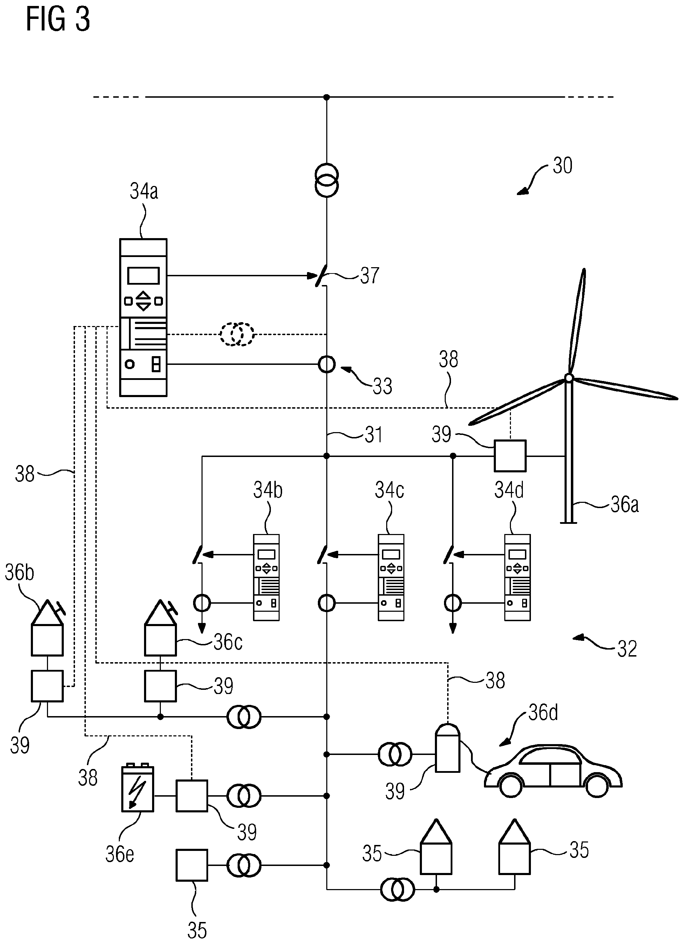

Hierzu zeigt Figur 3 beispielhaft ein Energieversorgungsnetz 30 mit einem an eine Zuführungsleitung 31 angeschlossenen Netzsegment 32. Der Aufbau des in Figur 3 dargestellten Energieversorgungsnetzes 30 entspricht in großen Teilen dem Aufbau des Energieversorgungsnetzes 10 aus Figur 1, so dass an dieser Stelle vorrangig auf die Unterschiede zwischen den Energieversorgungsnetzen 10 und 30 gemäß Figuren 1 und 3 eingegangen wird. So umfasst auch das Energieversorgungsnetz 30 ein an einer Messstelle 33 in der Zuführungsleitung 31 angeordnetes Schutzgerät 34a, dem einen Strom in der Zuführungsleitung 31 angebende Strommesswerte zugeführt werden. Daneben können wie in Figur 1 weitere Schutzgeräte 34b-d die einzelnen Zweige des Netzsegments absichern.

Im Unterschied zur Darstellung gemäß Figur 1 sind im Netzsegment 32 der Figur 2 neben herkömmlichen Energieverbrauchern 35 auch dezentrale Energieerzeuger 36a-e vorhanden. Dabei kann es sich bei den Energieerzeugern 36a-e entweder um reine Energieerzeuger, wie z.B. eine Windkraftanlage (Energieerzeuger 36a), oder um kombinierte Energieerzeuger/-verbraucher 36b-e (sogenannte "Prosumer") handeln. Solche Prosumer können z.B. Elektrofahrzeuge an Ladestationen (Energieerzeuger 36d), deren Energiespeicher sowohl elektrische Energie beziehen als auch rückspeisen können, elektrische Energiespeicher (Energieerzeuger 36e), z.B. Batterien, oder Gebäude mit installierten Photovoltaikanlagen (Energieerzeuger 36b-c), die überschüssige elektrische Energie ins Netzsegment 32 einspeisen können, sein. Durch den vergleichsweise hohen Anteil dezentral einspeisbarer elektrischer Energie kann in dem Energieversorgungsnetz 30 keine einheitliche Stromflussrichtung mehr ausgemacht werden; diese ist abhängig von der Menge dezentral eingespeister Energie.

Für das Schutzgerät 34a können hierdurch insbesondere zwei zusätzliche Szenarien auftreten, die bei herkömmlicher Betriebsweise des Schutzgerätes 34a zu falschen Entscheidungen hinsichtlich des Vorliegens eines Fehlers im Netzsegment 32 führen können. Einerseits wird bei vorliegender dezentraler Energieeinspeisung ein in dem Netzsegment 32 vorliegender Fehler nunmehr nicht ausschließlich durch die Zuführungsleitung 31 gespeist, sondern auch durch die einzelnen dezentralen Einspeisungen. Daher erkennt das Schutzgerät 34a im Fehlerfall einen niedrigeren, weil nur anteilig durch die Zuführungsleitung 31 fließenden, Fehlerstrom und würde nicht - oder gemäß der eingestellten Auslösekennlinie nur verzögert - ein Fehlersignal erzeugen, mit dem eine Schalteinrichtung 37 zum Auslösen veranlasst werden kann. Andererseits kann sich bei einer hohen Einspeisung durch die dezentralen Energieerzeuger 36a-e der Stromfluss in der Zuführungsleitung 31 umkehren, so dass ein lediglich die Höhe des Fehlerstromes, nicht aber dessen Richtung, berücksichtigendes Schutzgerät einen internen, also in dem Netzsegment anstehenden, Fehler nicht von einem externen, beispielsweise auf der Sammelschiene liegenden, Fehler unterscheiden könnte.

Um daher die Zuverlässigkeit und Selektivität eines Fehlerentscheids des Schutzgerätes 34a zu erhöhen, wird diesem über Kommunikationsverbindungen 38 (drahtlos oder drahtgebunden) eine Strom-Information über den an den jeweiligen Einspeisestellen, an denen die dezentralen Energieerzeuger 36a-e elektrische Energie in das Netzsegment einspeisen, momentan fließenden Strom zugeführt. Die Strom-Information kann hierbei beispielsweise einen Stromzeigermesswert umfassen, der den momentan an der Einspeisestelle fließenden Strom hinsichtlich seiner Amplitude und seines Phasenwinkels angibt. Die Strom-Information kann aber auch eine andere Größe umfassen, die es dem Schutzgerät 34a ermöglicht, daraus den momentan an der Einspeisestelle fließenden Strom zu berechnen; beispielsweise kann die Strom-Information eine momentan an der Einspeisestelle eingespeiste Leistung umfassen, aus der das Schutzgerät 34a bei bekannter Spannung den Momentanstrom an der Einspeisestelle bestimmen kann.

Die Strom-Information kann hierbei beispielsweise direkt von Einspeiseeinrichtungen 39, wie z.B. Umrichtern, bereitgestellt werden, die dazu eingerichtet sind, den dezentral erzeugten Strom, frequenz- und spannungsrichtig in das Netzsegment 32 einzuspeisen. Solche Einspeiseeinrichtungen 39 bestimmen oftmals ohnehin die momentan eingespeiste elektrische Leistung, so dass sie diesen Wert als Strom-Information direkt an das Schutzgerät 34a weitergeben können.

Außerdem kann die Strom-Information auch durch Sensoreinrichtungen, z.B. Phasormessgeräten, die den Strom an der jeweiligen Einspeisestelle bestimmen, bereitgestellt werden. Diese Variante eignet sich insbesondere dort, wo keine Einspeiseeinrichtung 39 vorhanden ist, oder diese nicht zur Bereitstellung oder zur Übertragung der Strom-Information eingerichtet ist.

Die Funktionsweise des Schutzgerätes 34a verbessert sich mit steigender Genauigkeit der Angabe über die dezentrale Energieeinspeisung im Netzsegment 32, daher sollte möglichst für jeden dezentralen Energieerzeuger 36a-e eine Strom-Information bereitgestellt werden. Dabei kann die Strom-Information für einen Energieerzeuger unter Umständen auch abgeschätzt werden, wenn entweder keine Möglichkeit zur Bereitstellung oder Übertragung einer Strom-Information vorhanden sein sollte oder aus wirtschaftlichen Gründen eine Nachrüstung mit separaten Sensoreinrichtungen nicht flächendeckend gewünscht ist. Bei Kenntnis der Anlagenparameter eines Energieerzeugers kann nämlich für einen benachbart angeordneten gleichartigen Energieerzeuger, dessen Anlagenparameter ebenfalls bekannt sind, die Strom-Information aus der vorhandenen Strom-Information des ersten Energieerzeugers abgeschätzt werden. Dies gilt insbesondere dann, wenn die beiden gleichartigen Energieerzeuger ihre elektrische Energie aus in ihrer Umgebung bereitgestellter Primärenergie (z.B. Wind, Sonnenlicht) gewinnen. Dies sei an einem Beispiel näher erläutert. Hierbei sei ein Energieerzeuger 36c ein Gebäude mit einer installierten Photovoltaikanlage. Eine Strom-Information wird durch den Energieerzeuger (bzw. durch eine diesen ansteuernde Steuereinrichtung) nicht bereitgestellt bzw. kann nicht an das Schutzgerät 34a übertragen werden. In demselben Netzsegment 32 - und damit benachbart zu dem Energieerzeuger 34a - befindet sich ein weiterer gleichartiger Energieerzeuger 36b, bei dem es sich ebenfalls um ein Gebäude mit einer installierten Photovoltaikanlage handelt. Für diesen Energieerzeuger 36b ist eine Strom-Information vorhanden und wird an das Schutzgerät 34a übertragen. Bei Kenntnis der Anlagenparameter dieses Energieerzeugers (z.B. maximal einspeisbare elektrische Leistung, Wirkungsgrad, Ausrichtungswinkel zur Sonne) kann anhand der Anlagenparameter des anderen Energieerzeugers 36c und der vorhandenen Strom-Information des Energieerzeugers 36b näherungsweise ein Rückschluss auf die dem Energieerzeuger 36c zur Verfügung stehende Primärenergie (eingestrahltes Sonnenlicht) gezogen werden, aus der dann wiederum für den Energieerzeuger 36c eine passende Strom-Information abgeschätzt werden kann. Die Schätzung kann hierbei entweder von dem Schutzgerät 34a oder der Einspeiseeinrichtung 39 des Energieerzeugers 36b oder in einem separaten Gerät durchgeführt werden.

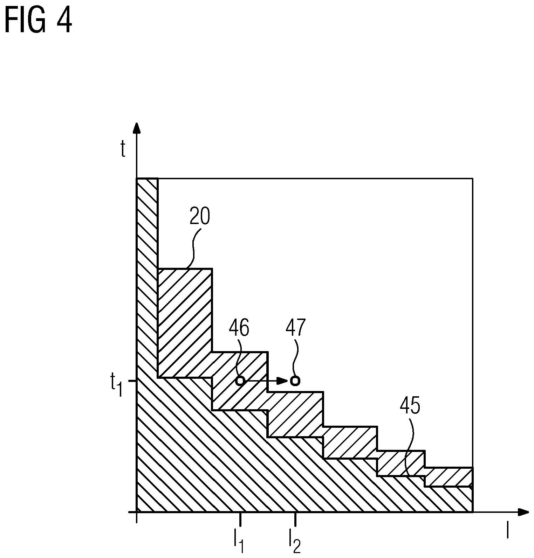

Das Schutzgerät 34a nutzt die übertragenen oder abgeschätzten Strom-Informationen zur Verbesserung der Zuverlässigkeit und Selektivität seiner Entscheidungen über einen Fehlerzustand des Netzsegments 32. Einerseits kann das Schutzgerät 34a die Strom-Informationen dazu nutzen, um den Strom-Schwellenwert dynamisch an die jeweilige momentane Einspeisesituation anzupassen. Je höher der Anteil im Netzsegment 32 eingespeister elektrischer Energie im Vergleich zum durch die Zuführungsleitung 31 eingespeister elektrischer Energie nämlich ausfällt, desto höher ist auch der Anteil eines Fehlerstroms, der im Falle eines innerhalb des Netzsegments 32 auftretenden Fehlers durch die Energieerzeuger 36a-e selbst gespeist wird. Im selben Maße verringert sich der durch die Zuführungsleitung 31 fließende Anteil des Fehlerstroms, so dass bei Verwendung des ursprünglich eingestellten Strom-Schwellenwertes keine - oder nur eine verzögerte - Erzeugung eines Fehlersignals durch das Schutzgerät 34a stattfinden würde. Daher wird bei Kenntnis der Strom-Informationen von dem Schutzgerät 34a der zur Beurteilung eines Fehlerzustands des Netzsegments herangezogene Strom-Schwellenwert dynamisch angepasst. Dies soll unter Hinzunahme von Figur 4 näher erläutert werden. Figur 4 zeigt in entsprechender Darstellung wie zu Figur 2 erläutert, ein Strom-Zeit-Diagramm, in dem einerseits der aus Figur 2 bekannte Strom-Schwellenwert in Form der ursprünglich in dem Schutzgerät 34a eingestellten Auslösekennlinie 20, gezeigt ist. Um den Strom-Schwellenwert an die tatsächliche Einspeisesituation in dem Netzsegment 32 anzupassen, verringert das Schutzgerät 34a je nach Höhe des durch die Strom-Informationen angegebenen dezentral eingespeisten Stroms den Strom-Schwellenwert. Ein Beispiel eines solchermaßen verringerten Strom-Schwellenwertes ist in Figur 4 als weitere Auslösekennlinie 45 gezeigt. Durch die dynamisch an die dezentrale Stromeinspeisung angepasste Verringerung des verwendeten Strom-Schwellenwertes kann beispielsweise erreicht werden, dass ein Wertepaar t1/I1, das bei Verwendung des ursprünglichen Strom-Schwellenwertes noch innerhalb des normalen Betriebsbereiches liegen und damit zu keiner Erzeugung eines Fehlersignals führen würde, bei Berücksichtigung des angepassten Strom-Schwellenwertes nunmehr innerhalb des Auslösebereichs liegt. Auf diese Weise kann ein geringer durch die Zuführungsleitung 31 fließender Anteil des Fehlerstroms durch die entsprechende Verringerung des zu seiner Beurteilung verwendeten Strom-Schwellenwertes ausgeglichen werden. Das Schutzgerät 34a kann bei Erkennung einer Überschreitung des verringerten Strom-Schwellenwertes beispielsweise unmittelbar das Fehlersignal erzeugen, das zur Generierung eines Auslösekommandos für die Schalteinrichtung 37 verwendet werden kann, um zumindest den durch die Zuführungsleitung 31 fließenden Anteil des Fehlerstroms abzuschalten. Die übrigen Fehlerstromanteile müssten direkt durch die betroffenen Energieerzeuger 36a-e abgeschaltet werden; hierfür weisen Steuereinrichtungen der Energieerzeuger 36a-e üblicherweise einfache Schutzmittel auf.

Alternativ dazu kann bei Überschreitung des verringerten Schwellenwertes das Schutzgerät 34a zunächst Ausschaltsignale erzeugen, die an die dezentralen Energieerzeuger 36a-e übertragen werden und diese zur (zumindest vorübergehenden) Unterbrechung ihrer Einspeisung veranlassen. Auf diese Weise wird nämlich die klassische Situation eines lediglich durch die Zuführungsleitung 31 gespeisten Netzsegments 32 wiederhergestellt, so dass der komplette Fehlerstrom nunmehr durch die Zuführungsleitung 31 fließt und das Schutzgerät 34a wieder den ursprünglichen Strom-Schwellenwert - z.B. in Form der Auslösekennlinie 20 - zur Beurteilung der Fehlersituation verwenden kann. Beispielhaft ist die Situation nach Abschaltung der dezentralen Energieerzeuger 36a-e in Figur 4 durch das mit dem Bezugszeichen 47 gekennzeichnete Wertepaar t1/I2 illustriert. Durch die Abschaltung der dezentralen Energieerzeuger 36a-e steigt der durch die Zuführungsleitung 31 fließende Anteil des Fehlerstroms sprunghaft an, so dass das resultierende Wertepaar nunmehr auch bei Verwendung des ursprünglichen Strom-Schwellenwertes (Auslösekennlinie 20) im Auslösebereich liegt. Das Schutzgerät 34a erzeugt nachfolgend das Fehlersignal, das zur Auslösung der Schalteinrichtung 37 verwendet werden kann.

Eine weitere Möglichkeit der Verbesserung der Funktionsweise des Schutzgerätes 34a durch Hinzunahme der Strom-Informationen der einzelnen Energieerzeuger 36a-e besteht darin, eine Stromflussrichtung in der Zuführungsleitung 31 anhand der Menge durch die dezentralen Energieerzeuger 36a-e eingespeister elektrischer Energie zu erkennen. Übersteigt nämlich die eingespeiste elektrische Energie im Vergleich zur durch das restliche Energieversorgungsnetz 30 bereitgestellten Energie und dem Energieverbrauch innerhalb des Netzsegments einen bestimmten Wert, so kann sich die Stromflussrichtung in der Zuführungsleitung 31 umkehren und Strom aus dem Netzsegment 32 heraus fließen. Da das Schutzgerät 34a zunächst nur die Höhe des in der Zuführungsleitung 31 fließenden Stromes im Vergleich zum Strom-Schwellenwert betrachtet, kann allein aus diesem Vergleich folglich keine Aussage über einen intern oder extern vorliegenden Fehler getroffen werden. Durch Hinzunahme der Strom-Information und der Ableitung der Stromflussrichtung in der Zuführungsleitung 31 kann dies hingegen erfolgen.

Üblicherweise dient ein Überstromzeitschutzgerät dazu, lediglich interne Fehler abzuschalten. In Energieversorgungsnetzen mit hoher dezentraler Einspeisung werden jedoch auch externe Fehler durch die Energieerzeuger 36a-e in dem Netzsegment gespeist, so dass auch in einem solchen Fall eine Erzeugung eines Fehlersignals und eine Abschaltung des - in umgekehrter Richtung - durch die Zuführungsleitung 31 fließenden Stromes erfolgen sollte. Daher erzeugt das Schutzgerät 34a auch dann das Fehlersignal, wenn der Strom-Schwellenwert überschritten ist und die durch die Strom-Informationen angegebene Höhe der in dem Netzsegment 32 eingespeisten elektrischen Energie eine Stromflussumkehr in der Zuführungsleitung 31 erwarten lässt. Ggf. sollte auch in einem solchen Fall ein an die Strom-Information angepasster Strom-Schwellenwert verwendet werden, um die Höhe des durch die Zuführungsleitung 31 fließenden, den externen Fehler speisenden, Fehlerstromanteils zu berücksichtigen.

Um die Stromflussrichtung in der Zuführungsleitung 31 noch genauer bestimmen zu können, kann eine zusätzliche Erfassung von Spannungsmesswerten (in Figur 3 gestrichelt angedeutet) an der Messstelle 33 vorgesehen sein, die die an der Zuführungsleitung 31 anliegenden Spannung angeben und die ebenfalls dem Schutzgerät 34a zur Verfügung gestellt werden. Anhand der ohnehin vorhandenen Strommesswerte und der zusätzlichen Spannungsmesswerte kann eine Richtung des Stromflusses bestimmt werden. In diesem Fall wird das Fehlersignal zusätzlich nur dann erzeugt, wenn auch die derart erkannte Stromrichtung einen aus dem Netzsegment 32 heraus fließenden Strom angibt.

Außerdem kann das Schutzgerät 34a mit der Erzeugung eines Fehlersignals zum Abschalten eines externen Fehlers auch einen Einschaltbefehl an die dezentralen Energieerzeuger 36a-e abgeben, der diese zur Fortsetzung ihrer Energieeinspeisung veranlasst, und zwar auch beim Auslösen eines etwaigen in die Steuerung des jeweiligen Energieerzeugers 36a-e integrierten Schutzmittels. Damit soll verhindert werden, dass bei Vorliegen eines externen Fehlers die Energieerzeuger ihre Einspeisung unterbrechen. Da der durch die dezentralen Energieerzeuger 36a-e gespeiste Anteil des Fehlerstroms nämlich bereits durch das Schutzgerät 34a durch Auslösen der Schalteinrichtung 37 in der Zuführungsleitung unterbrochen wird, müssen die Energieerzeuger 36a-e nicht selbsttätig für eine Unterbrechung sorgen. Damit wird die Aufrechterhaltung der Stromversorgung für in dem nunmehr als Inselnetz betriebenen Netzsegment 32 vorhandene Energieverbraucher 35 gewährleistet.

## Patentansprüche

1. Verfahren zum Erkennen eines Fehlers in einem Netzsegment (32) eines elektrischen Energieversorgungsnetzes (30), bei dem
- mittels eines Schutzgerätes (34a) der in einer Zuführungsleitung (31) des Netzsegments (32) fließende Strom unter Bildung von Strommesswerten erfasst wird,
- die Strommesswerte mit einem Strom-Schwellenwert verglichen werden, und
- bei Überschreitung des Strom-Schwellenwertes von dem Schutzgerät (34a) ein Fehlersignal erzeugt wird, das einen Fehler in dem Netzsegment (32) angibt,
- in dem Netzsegment (32) des Energieversorgungsnetzes (30) zumindest ein Energieerzeuger (36a-e) angeordnet ist, der an einer Einspeisestelle elektrische Energie in das Netzsegment (32) einspeist,
- eine Strom-Information erfasst wird, die eine Angabe über den momentan an der Einspeisestelle fließenden Strom umfasst,
- die Strom-Information an das Schutzgerät (34a) übermittelt wird, und
- das Schutzgerät (34a) die Strom-Information zum Erkennen des Fehlers heranzieht,
**dadurch gekennzeichnet, dass**
- das Schutzgerät (34a) das Fehlersignal auch dann erzeugt, wenn der Strom-Schwellenwert überschritten ist und aus der Strom-Information des zumindest einen Energieerzeugers (36a-e) ein Überschuss in das Netzsegment (32) eingespeister elektrischer Energie hervorgeht; und
- mit der Erzeugung des Fehlersignals das Schutzgerät (34a) einen Einschaltbefehl an den zumindest einen Energieerzeuger (36a-e) abgibt, das den zumindest einen Energieerzeuger (36a-e) zur Fortsetzung seiner Einspeisung elektrischer Energie in das Netzsegment (32) veranlasst.

2. Verfahren nach Anspruch 1,
**dadurch gekennzeichnet, dass**
- die Strom-Information einen an der Einspeisestelle erfassten Stromzeigermesswert umfasst, der Amplitude und Phasenwinkel des Stroms an der Einspeisestelle angibt.

3. Verfahren nach Anspruch 1,
**dadurch gekennzeichnet, dass**
- die Strom-Information einen an der Einspeisestelle erfassten Leistungsmesswert umfasst.

4. Verfahren nach einem der vorangehenden Ansprüche,
**dadurch gekennzeichnet, dass**
- die Strom-Information von einer Einspeiseeinrichtung (39) erzeugt wird, die dazu eingerichtet ist, die von dem zumindest einen Energieerzeuger (36a-e) abgegebene elektrische Energie in das Netzsegment (32) des Energieversorgungsnetzes (30) einzukoppeln.

5. Verfahren nach einem der vorangehenden Ansprüche,
**dadurch gekennzeichnet, dass**
- die Strom-Information von einer Sensoreinrichtung erzeugt wird, die zur Messung von Strom- und/oder Leistung an der Einspeisestelle eingerichtet ist.

6. Verfahren nach einem der vorangehenden Ansprüche,
**dadurch gekennzeichnet, dass**
- das Schutzgerät (34a) bei vorliegendem Fehlersignal ein Schaltkommando an eine in der Zuführungsleitung (31) des Netzsegments (32) angeordnete Schalteinrichtung (37) abgibt, das die Schalteinrichtung (37) zum Unterbrechen des Stromflusses durch die Zuführungsleitung (31) veranlasst.

7. Verfahren nach einem der vorangehenden Ansprüche,
**dadurch gekennzeichnet, dass**
- in dem Netzsegment (32) außer dem zumindest einen Energieerzeuger (z.B. 36b) zumindest ein weiterer, gleichartiger Energieerzeuger (z.B. 36c) vorgesehen ist, und
- die Strom-Information für die Einspeisestelle des zumindest einen weiteren Energieerzeugers (36c) anhand der Strom-Information des zumindest einen Energieerzeugers (36b) abgeschätzt wird.

8. Verfahren nach einem der vorangehenden Ansprüche,
**dadurch gekennzeichnet, dass**
- die Strom-Information von dem Schutzgerät (34a) zur Anpassung des Strom-Schwellenwertes herangezogen wird, indem bei steigender von dem zumindest einen Energieerzeuger (36a-e) in das Netzsegment (32) eingespeister elektrischer Energie ein entsprechend verringerter Strom-Schwellenwert verwendet wird.

9. Verfahren nach Anspruch 8,
**dadurch gekennzeichnet, dass**
- bei Überschreitung des verringerten Strom-Schwellenwertes das Schutzgerät (34a) das Fehlersignal erzeugt.

10. Verfahren nach Anspruch 8,
**dadurch gekennzeichnet, dass**
- bei Überschreitung des verringerten Strom-Schwellenwertes das Schutzgerät (34a) ein Ausschaltsignal an den zumindest einen Energieerzeuger (36a-e) sendet, das den zumindest einen Energieerzeuger (36a-e) zum Unterbrechen der Einspeisung der elektrischen Leistung in das Netzsegment (32) veranlasst, und
- nach erfolgter Unterbrechung der Einspeisung das Schutzgerät (34a) den in der Zuführungsleitung (31) des Netzsegments (32) fließenden Strom mit dem ursprünglichen Strom-Schwellenwert vergleicht und das Fehlersignal nur bei Überschreitung des ursprünglichen Strom-Schwellenwertes erzeugt.

11. Verfahren nach einem der vorangehenden Ansprüche,
**dadurch gekennzeichnet, dass**
- das Schutzgerät (34a) auch die an der Zuführungsleitung (31) des Netzsegments (32) anliegende Spannung unter Erzeugung von Spannungsmesswerten erfasst und unter Heranziehung der Strommesswerte und der Spannungsmesswerte ein Richtungssignal bildet, das eine Richtung des in der Zuführungsleitung (31) des Netzsegments (32) fließenden Stroms angibt, und
- das Schutzgerät (34a) das Fehlersignal nur dann erzeugt, wenn auch das Richtungssignal einen aus dem Netzsegment (32) heraus fließenden Strom angibt.

12. Elektrisches Schutzgerät (34a) mit einer Messwerterfassungseinrichtung zum Erfassen von Strommesswerten an einer Messstelle (33) in einer Zuführungsleitung (31) eines Netzsegments (32) eines elektrischen Energieversorgungsnetzes (30) und einer Steuereinrichtung, die dazu eingerichtet ist, die Strommesswerte mit einem Strom-Schwellenwert zu vergleichen und bei Überschreitung des Strom-Schwellenwertes ein Fehlersignal zu erzeugen,
**dadurch gekennzeichnet, dass**
- das Schutzgerät (34a) zur Durchführung eines Verfahrens gemäß einem der Ansprüche 1 bis 11 eingerichtet ist.

13. Schutzsystem zur Erkennung eines Fehlers in einem Netzsegment (32) eines elektrischen Energieversorgungsnetzes (30),
**dadurch gekennzeichnet, dass**
- das Netzsegment (32) zumindest einen Energieerzeuger (36a-e) aufweist, der zur Einspeisung elektrischer Energie in das Netzsegment (32) eingerichtet ist, und
- das Schutzsystem an einer Zuführungsleitung (31) des Netzsegments (32) ein Schutzgerät (34a) nach Anspruch 12 aufweist.

## Claims

1. Method for identifying a fault in a system segment (32) of an electrical power supply system (30), in which
- a protection device (34a) is used to sense the current flowing in a supply line (31) of the system segment (32) to form current measured values,
- the current measured values are compared with a current threshold value, and
- if the current threshold value is exceeded then the protection device (34a) produces a fault signal that indicates a fault in the system segment (32),
- the system segment (32) of the power supply system (30) contains at least one power generator (36a-e) that feeds electric power into the system segment (32) at a feed point,
- a piece of current information is sensed that comprises a statement about the current instantaneously flowing at the feed point,
- the piece of current information is transmitted to the protection device (34a), and
- the protection device (34a) uses the piece of current information to identify the fault,
**characterized in that**
- the protection device (34a) produces the fault signal even when the current threshold value has been exceeded and the piece of current information from the at least one power generator (36a-e) reveals an excess of electric power fed into the system segment (32); and
- when the fault signal is produced the protection device (34a) outputs a switch-on command to the at least one power generator (36a-e), which switch-on command prompts the at least one power generator (36a-e) to continue its feed of electric power into the system segment (32).

2. Method according to Claim 1,
**characterized in that**
- the piece of current information comprises a current vector measured value that is sensed at the feed point and that indicates the amplitude and phase angle of the current at the feed point.

3. Method according to Claim 1,
**characterized in that**
- the piece of current information comprises a power measured value sensed at the feed point.

4. Method according to one of the preceding claims,
**characterized in that**
- the piece of current information is produced by a feed device (39) that is set up to couple the electric power output by the at least one power generator (36a-e) into the system segment (32) of the power supply system (30).

5. Method according to one of the preceding claims,
**characterized in that**
- the piece of current information is produced by a sensor device that is set up to measure current and/or power at the feed point.

6. Method according to one of the preceding claims,
**characterized in that**
- the protection device (34a) is prompted by the presence of a fault signal to output a switching command to a switching device (37) arranged in the supply line (31) of the system segment (32), which switching command prompts the switching device (37) to interrupt the flow of current through the supply line (31).

7. Method according to one of the preceding claims,
**characterized in that**
- the system segment (32) contains not only the at least one power generator (e.g. 36b) but also at least one further, similar power generator (e.g. 36c), and
- the piece of current information for the feed point of the at least one further power generator (36c) is estimated on the basis of the piece of current information from the at least one power generator (36b).

8. Method according to one of the preceding claims,
**characterized in that**
- the piece of current information is used by the protection device (34a) to adjust the current threshold value by virtue of rising electric power fed into the system segment (32) by the at least one power generator (36a-e) prompting the use of a correspondingly reduced current threshold value.

9. Method according to Claim 8,
**characterized in that**
- if the reduced current threshold value is exceeded then the protection device (34a) produces the fault signal.

10. Method according to Claim 8,
**characterized in that**
- if the reduced current threshold value is exceeded then the protection device (34a) sends a switch-off signal to the at least one power generator (36a-e), which switch-off signal prompts the at least one power generator (36a-e) to interrupt the feed of electric power into the system segment (32), and
- after the feed is interrupted the protection device (34a) compares the current flowing in the supply line (31) of the system segment (32) with the original current threshold value and produces the fault signal only if the original current threshold value is exceeded.

11. Method according to one of the preceding claims,
**characterized in that**
- the protection device (34a) also senses the voltage applied to the supply line (31) of the system segment (32) to produce voltage measured values and uses the current measured values and the voltage measured values to form a direction signal that indicates the direction of the current flowing in the supply line (31) of the system segment (32), and
- the protection device (34a) produces the fault signal only when the direction signal also indicates a current flowing out of the system segment (32).

12. Electrical protection device (34a) having a measured value sensing device for sensing current measured values at a measurement point (33) in a supply line (31) of a system segment (32) of an electrical power supply system (30) and having a control device that is set up to compare the current measured values with a current threshold value and, if the current threshold value is exceeded, to produce a fault signal,
**characterized in that**
- the protection device (34a) is set up to perform a method according to one of Claims 1 to 11.

13. Protection system for identifying a fault in a system segment (32) of an electrical power supply system (30),
**characterized in that**
- the system segment (32) has at least one power generator (36a-e) that is set up to feed electric power into the system segment (32), and
- the protection system has a protection device (34a) according to Claim 12 on a supply line (31) of the system segment (32).

## Revendications

1. Procédé de détection d'une défaillance dans un segment (32) d'un réseau (30) d'alimentation en énergie électrique, dans lequel
- au moyen d'un appareil (34a) de protection, on détecte, en formant des valeurs de mesure du courant, le courant passant dans une ligne (31) d'alimentation du segment (32) du réseau,
- on compare les valeurs de mesure du courant à une valeur de seuil du courant et
- si la valeur de seuil du courant est dépassée, on produit, par l'appareil (34) de protection, un signal de défaillance, qui indique une défaillance dans le segment (32) du réseau,
- on met, dans le segment (32) du réseau (30) d'alimentation en énergie, au moins un producteur (36a-e) d'énergie, qui injecte dans le segment (32) du réseau de l'énergie électrique en un point d'injection,
- on détecte une information de courant, qui comprend une indication sur le courant passant instantanément au point d'injection,
- on transmet l'information de courant à l'appareil (34a) de protection et
- l'appareil (34a) de protection tire parti de l'information de courant pour détecter la défaillance,
**caractérisé en ce que**
- l'appareil (34a) de protection produit le signal de défaillance, même lorsque la valeur de seuil du courant est dépassée, et il résulte de l'information de courant du au moins un producteur (36a-e) d'énergie un excès d'énergie électrique injecté dans le segment (32) du réseau et
- avec la production du signal de défaillance, l'appareil (34a) de protection émet une instruction de connexion vers le au moins un producteur (36a-e) d'énergie, qui fait que le au moins un producteur (36a-e) d'énergie continue à injecter de l'énergie électrique dans le segment (32) du réseau.

2. Procédé suivant la revendication 1,
**caractérisé en ce que**
- l'information de courant comprend une valeur de mesure d'un vecteur de courant détectée au point d'injection, qui indique l'amplitude et l'angle de phase du courant au point d'injection.

3. Procédé suivant la revendication 1,
**caractérisé en ce que**
- l'information de courant comprend une valeur de mesure de puissance détectée au point d'injection.

4. Procédé suivant l'une des revendications précédentes,
**caractérisé en ce que**
- l'information de courant est produite par un dispositif (39) d'injection conçu pour injecter, dans le segment (32) du réseau (30) d'alimentation en énergie, de l'énergie électrique cédée par le au moins un producteur (36a-e) d'énergie.

5. Procédé suivant l'une des revendications précédentes,
**caractérisé en ce que**
- l'information de courant est produite par un dispositif de capteur conçu pour mesurer le courant et/ou la puissance au point d'injection.

6. Procédé suivant l'une des revendications précédentes,
**caractérisé en ce que**
- l'appareil (34a) de protection émet, en présence d'un signal de défaillance, une instruction de commutation vers un dispositif (37) de commutation, monté dans la ligne (31) d'alimentation du segment (32) du réseau, instruction qui fait que le dispositif (37) de commutation interrompt le flux de courant passant dans la ligne (31) d'alimentation.

7. Procédé suivant l'une des revendications précédentes,
**caractérisé en ce que**
- il est prévu dans le segment (32) du réseau, outre le au moins un producteur (par exemple 36b) d'énergie, au moins un autre producteur (par exemple 36c) d'énergie de même type et
- l'information de courant, pour le point d'injection du au moins un autre producteur (36c) d'énergie, est estimée à l'aide de l'information de courant du au moins un producteur (36b) d'énergie.

8. Procédé suivant l'une des revendications précédentes,
**caractérisé en ce que**
- l'information de courant est mise à profit par l'appareil (34a) de protection pour adapter la valeur de seuil du courant par le fait que, si l'énergie électrique injectée par le au moins un producteur (36a-e) d'énergie dans le segment (32) du réseau augmente, une valeur de seuil de courant diminuée en conséquence est utilisée.

9. Procédé suivant la revendication 8,
**caractérisé en ce que**
- si la valeur de seuil du courant diminuée est dépassée, l'appareil (34a) de protection produit le signal de défaillance.

10. Procédé suivant la revendication 8,
**caractérisé en ce que**
- si la valeur de seuil du courant diminuée est dépassée, l'appareil (34a) de protection envoie un signal de déconnexion au au moins un producteur (36a-e) d'énergie, signal qui fait que le au moins un producteur (36a-e) d'énergie interrompt l'injection de puissance électrique dans le segment (32) du réseau et
- après que l'interruption de l'injection a été effectuée, l'appareil (34a) de protection compare le courant passant dans la ligne (31) d'alimentation du segment (32) du réseau à la valeur de seuil initiale du courant et produit le signal de défaillance seulement si la valeur de seuil initiale du courant est dépassée.

11. Procédé suivant l'une des revendications précédentes,
**caractérisé en ce que**
- l'appareil (34a) de protection détecte aussi, en produisant des valeurs de mesure de tension, la tension appliquée à la ligne (31) d'alimentation du segment (32) du réseau et, en tirant parti des valeurs de mesure du courant et des valeurs de mesure de la tension,forme un signal de sens, qui indique un sens du courant passant dans la ligne (31) d'alimentation du segment (32) du réseau et
- l'appareil (34a) de protection ne produit le signal de défaillance que si également le signal de sens indique un courant sortant du segment (32) du réseau.

12. Appareil (34a) électrique de protection, comprenant un dispositif de détection de valeurs de mesure pour détecter des valeurs de mesure du courant en un point (33) de mesure dans une ligne (31) d'alimentation d'un segment (32) d'un réseau (30) d'alimentation en énergie électrique, et un dispositif de commande conçu pour comparer les valeurs de mesure du courant à une valeur de seuil du courant et, s' il y a dépassement de la valeur de seuil du courant, pour produire un signal de défaillance,
**caractérisé en ce que**
- l'appareil (34a) de protection est conçu pour effectuer un procédé suivant l'une des revendications 1 à 11.

13. Système de protection pour détecter une défaillance dans un segment (32) d'un réseau (30) d'alimentation en énergie électrique,
**caractérisé en ce que**
- le segment (32) du réseau a au moins un producteur (36a-e) d'énergie conçu pour injecter de l'énergie électrique dans le segment (32) du réseau et
- le système de protection a un appareil (34a) de protection suivant la revendication 12 sur une ligne (31) d'alimentation du segment (32) du réseau.
